Europäisches Patentamt

European Patent Office

Office européen des brevets

(11) Veröffentlichungsnummer : **0 060 310**
**B1**

(12) **EUROPÄISCHE PATENTSCHRIFT**

(45) Veröffentlichungstag der Patentschrift :
**17.07.85**

(51) Int. Cl.⁴ : **F 16 L 37/00**, F 16 L 17/02,
F 16 L 21/00

(21) Anmeldenummer : **81101851.4**

(22) Anmeldetag : **12.03.81**

(54) Steckmuffe.

(43) Veröffentlichungstag der Anmeldung :
**22.09.82 Patentblatt 82/38**

(45) Bekanntmachung des Hinweises auf die Patenterteilung : **17.07.85 Patentblatt 85/29**

(84) Benannte Vertragsstaaten :
**AT BE CH DE FR GB IT LI NL SE**

(56) Entgegenhaltungen :
EP-A- 0 002 118
BE-A- 741 333
DE-A- 2 059 311
DE-A- 2 604 099
DE-A- 2 756 540
DE-B- 1 188 879
LU-A- 62 127
US-A- 1 926 197
US-A- 3 837 683

(73) Patentinhaber : WOCO Franz-Josef Wolf & Co.
Sprudelallee 19
D-6483 Bad Soden-Salmünster (DE)

(72) Erfinder : Wolf, Franz Josef
Sprudelallee 19
D-6483 Bad Soden-Salmünster (DE)
Erfinder : Kaminski, Peter
Festplatzstrasse 5
D-6480 Wächtersbach-Aufenau (DE)

(74) Vertreter : Jaeger, Klaus, Dr.rer.nat. Dipl.-Chem. et al
Jaeger, Grams & Pontani Patentanwälte Bergstrasse
48 1/2
D-8035 München-Gauting (DE)

## Beschreibung

Die Erfindung betrifft eine Steckmuffe der im Oberbegriff des Anspruchs 1 genannten Art.

Eine solche Steckmuffe ist aus der Druckschrift EP-A-2 118 bekannt. Ähnliche Steckmuffen, bei denen die axial verlaufenden Rippen jedoch nicht elastisch verformbar sind, sind aus den Druckschriften DE-A-2 604 099 und DE-A-2 756 540 bekannt.

Die in den bekannten Steckmuffen angeordneten axialen Rippen dienen der Zentrierung des in die Steckmuffe eingesteckten Spitzendes sowie dem Auffangen einwirkender Scherlasten. Solche axialen Rippen werden daher häufig kurz als « Scherlaststütze » bezeichnet. « Scherlasten » sind dabei quer zur Längsachse der Rohrsteckverbindung einwirkende Kräfte, die im Sinne einer Parallelversetzung der Achsen des Spitzendes und der Muffe wirken.

Die aus der Druckschrift DE-A-2 756 540 und aus der Druckschrift DE-A-2 604 099 bekannten Scherlaststützen sind aus der formsteifen Hülse ausgeformt und sind nicht elastisch verformbar. Bei der aus der Druckschrift DE-A-2 756 540 bekannten Scherlaststütze sind die radial innenliegenden Führungsflächen der axialen Rippen konisch verlaufend ausgebildet, wodurch zwar ein Zentriereffekt und eine Aufnahme der Scherlast bewirkt wird, aber kein Beitrag zum Auffangen von Knickkräften geleistet wird, die im Sinne einer Durchknickung der Achsen des Spitzendes und der Steckmuffe wirken. Dagegen sind die axialen Rippen gemäß der Druckschrift DE-A-2 604 099 mit ihren radial innenliegenden Kanten zwar im wesentlichen axial ausgebildet, jedoch muß der durch die Innenkanten dieser Rippen definierte lichte Durchmesser der Muffe zumindest geringfügig größer als der im Toleranzbereich größtmögliche Außendurchmesser des einzusteckenden Spitzendes sein. Dies bedingt ein relativ großes Spiel, insbesondere bei Durchmessern des Spitzendes im unteren Toleranzbereich, so daß der Beitrag dieser axialen Rippen zur Verbesserung der Scherlastfestigkeit nur mäßig ist.

Die aus der Druckschrift EP-A-2 118 bekannten radialen Rippen, die als Scherlaststützen dienen, sind im Gegensatz zu den vorstehend diskutierten axialen Rippen zwar elastisch verformbar, jedoch durch ihre Ausformung aus der formstabilelastischen Muffenhülse nur in beschränktem Umfang, und zwar federelastisch, verformbar. Solche Querlaststützen vermögen zwar Unrundungen des Spitzendes und Abweichungen des äußeren Istdurchmessers des Spitzendes von Sollwerten aufzufangen, dies jedoch nur innerhalb eines relativ engen Toleranzbereiches. Größere Toleranzbereiche des Außendurchmessers des einzusteckenden Spitzendes können durch diese Scherlaststützen nicht mehr aufgefangen werden, da sonst entweder im Bereich der großen Durchmesser eine zu starke Verformung oder ein Reißen der Hülse der Manschette zu befürchten ist, oder im Bereich kleiner Durchmesser des Spitzendes das Spitzende wie im Fall der aus der Druckschrift DE-A-2 604 099 bekannten Muffe nicht mehr ausreichend abgestützt ist.

Aus der DE-A-2 059 311 ist eine Steckmuffe ähnlicher Art bekannt, die im Bereich des Muffenspiegels eine Scherlaststütze aufweist. Diese Scherlaststütze ist jedoch als vollwandiger, zylindrischer Bereich ausgestaltet, so daß sie im wesentlichen nur für einen bestimmten Außendurchmesser der Spitzenden verwendbar ist. Sofern daher Spitzenden mit größerem Außendurchmesser in diese Steckmuffe eingeschoben werden sollen, sind beim Einschieben der Spitzenden in den Bereich des Muffenspiegels durch die dort stattfindende Materialverpressung erhebliche Einschubkräfte erforderlich, was jedoch auch zu einer Beschädigung der Manschette in diesem Bereich führen kann. Bei kleineren Durchmessern im unteren Toleranzbereich des Außendurchmessers der Spitzenden kann diese Steckmuffe jedoch Scherlast- und Knickkräfte erst bei einem Anliegen gegen die Innenwandung der Manschette im Muffenspiegelbereich aufnehmen.

Angesichts dieses Standes der Technik liegt der Erfindung die Aufgabe zugrunde, eine Einsteckmuffe der eingangs genanten Art zu schaffen, die auch Spitzenden zuverlässig und wirksam gegen Scherlastkräfte und Knickkräfte abzustützen vermag, deren Außendurchmesser fertigungsbedingt innerhalb eines großen Toleranzbereiches schwanken können.

Zur Lösung dieser Aufgabe wird eine Steckmuffe der im Oberbegriff des Anspruchs 1 genannten Art geschaffen, die erfindungsgemäß die im kennzeichnenden Teil des Anspruchs 1 genannten Merkmale aufweist.

Die der Erfindung zugrunde liegende Aufgabe wird also dadurch gelöst, daß die axial verlaufenden und elastisch verformbaren Rippen im Inneren der Steckmuffe, die als Scherlaststütze dienen, aus einem vollen gummielastischen Werkstoff bestehen, der von dem formgebenden Werkstoff der Hülse verschieden ist. Dadurch wird bewirkt, daß die axialen Rippen stark und sehr stark sowohl gummielastisch verformt als auch verpreßt werden können, ohne daß dadurch die Steifigkeit oder die Formstabilität oder Beständigkeit der Muffe in Frage gestellt werden. Insbesondere kann der durch die Innenkanten solcherart gummielastisch ausgebildeten Rippen definierte lichte Durchmesser wesentlich kleiner als der im Toleranzbereich kleinste Außendurchmesser des einzusteckenden Spitzendes ausgebildet werden, ohne daß die Steckmuffe beim Einstecken eines Spitzendes mit einem im Toleranzbereich großen Durchmesser verformt oder beschädigt wird. Vielmehr werden Rohre mit Durchmessern sowohl im Bereich des kleinsten als auch im Bereich des größten im Toleranzbereich zulässigen Durchmessers fest und sicher sowohl gegen axialen Zug als insbesondere auch gegen Querkrafteinwirkungen gehalten. Dadurch wird eine wesentliche Stabilisierung der mit der Steckmuffe der Erfindung hergestellten Rohrsteckverbindung erreicht. Die Steckmuffe der Erfindung eignet sich daher insbesondere zur Herstellung und zur Verwendung in solchen Steckmuffen, die zylindrisch und hülsenartig ausgebildet und an beiden Stirnseiten offen sind und dem Verbinden zweier muffenloser Rohrabschnitte oder Spitzenden dienen.

Vorzugsweise wird die Steckmuffe der Erfindung mit den gummielastisch verformbaren inneren axial verlaufenden Rippen als Scherlaststützen in Verbindung mit einem federelastischen Stützring verwendet, der axial vor den ringförmigen gummielastischen Dichtungselementen, also zum Muffenausgang oder Muffenkragen hin, angeordnet ist. Das eingesteckte Spitzende wird dadurch auf zwei Ringebereichen, also durch die gummielastisch verformbaren Rippen und durch den federelastisch verformbaren Stützring, abgestützt, wobei die gummielastischen Dichtungselemente zwischen diesen beiden Stützringen angeordnet und praktisch keinerlei Querkräften außer den Dichtungskräften ausgesetzt sind. Eine solcherart ausgebildete beidseitig offene Steckmuffe weist insbesondere eine überraschend hohe Quersteifigkeit, also einen hohen Knickwiderstand, auf.

Die gummielastische, als Innenauskleidung der Steckmuffe dienende Manschette weist vorzugsweise Vorsprünge und/oder Rücksprünge auf, die komplementär in entsprechend auf der Innenseite der Muffenhülse angeordnete Vorsprünge bzw. Rücksprünge eingreifen, so daß eine gegen axiale Verschiebung und radiale Verdrehung gesicherte Verbindung zwischen der Manschette und der Hülse erhalten wird. Eine solche Sicherung kann alternativ oder zusätzlich auch durch oder in Verbindung mit dem federleastischen Stützring am Muffenkragen bewirkt werden.

Die Hülse besteht vorzugsweise aus Stahlblech. Der Stützring kann aus Federstahl oder Kunststoff bestehen und sowohl einstückig mit der Hülse ausgebildet oder als separates Teil ausgebildet sein, das auf die Hülse aufgesteckt und an dieser durch Einrasten, Festkleben, Preßsitz oder Verschweißen befestigt ist.

Die Erfindung ist im folgenden an Hand eines Ausführungsbeispiels in Verbindung mit der Zeichnung näher erläutert. Es zeigt die einzige Figur, nämlich die

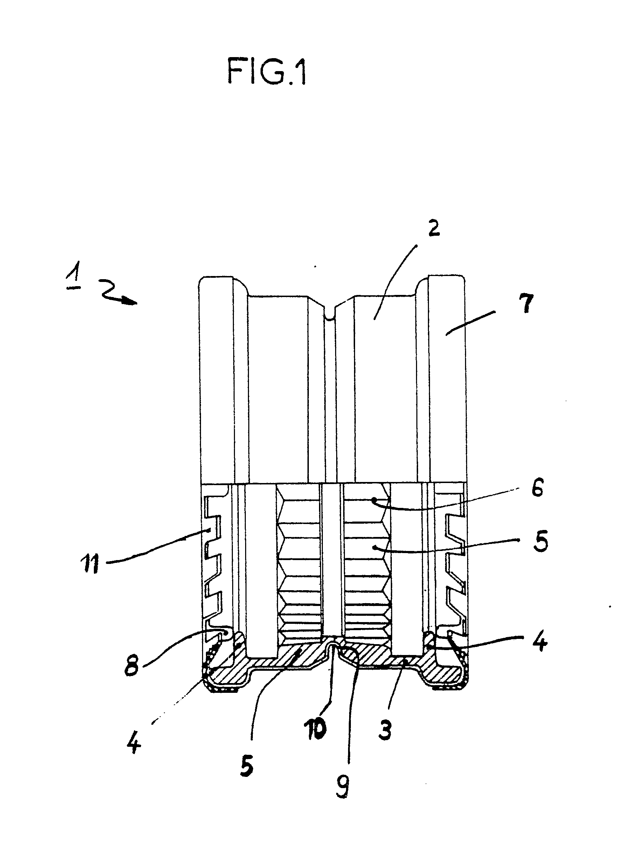

Figur 1 teils in Seitensicht, teils im Axialschnitt ein Ausführungsbeispiel der Steckmuffe der Erfindung.

Die in der Fig. 1 als Ausführungsbeispiel der Erfindung gezeigte Steckmuffe 1 besteht aus einer formstabilen Hülse 2 aus korrosionsbeständigem Stahlblech und in dieser aus einer sich über die gesamte axiale Länge der Hülse 2 erstreckenden gummielastischen Manschette 3, an der in beiden Kragenbereichen der Steckmuffe 1 gummielastisch verformbare Dichtungselemente 4 einstückig angeformt sind. Von den beiden Muffenkragen aus gesehen im Bereich des Muffenspiegels, also axial zentral in der in der Fig. 1 gezeigten Steckmuffe 1, sind axial verlaufende, radial mit gleichem Winkelabstand voneinander angeordnete elastisch verformbare Rippen 5 einstückig aus der Manschette 3 ausgeformt. Sowohl die Manschette 3 als auch dementsprechend die Rippen 5 bestehen aus einem gummielastischen Werkstoff, insbesondere einem Elastomer der Härte im Bereich von 40 bis 75 Shore A. Die axialen Rippen 5, die als Scherlaststütze dienen, weisen im wesentlichen im Radialschnitt ein dreieckiges, vorzugsweise gleichseitig-dreieckiges Profil auf und weisen an ihren axial zum Muffenkragen weisenden Flächen entweder jeweils für sich im wesentlichen Kegelform auf oder sind mit Schrägflächen ausgestaltet, die insgesamt einen konischen Verlauf bilden. Die solcherart ausgebildeten, zum Muffenkragen weisenden Stirnflächen der Rippen 5 dienen der Leichteren Einführung des Spitzendes auf die radial innenliegenden Kanten 6 der Rippen 5.

Auf die Muffenkragen ist von außen jeweils ein Federzungenring 7 aus Federstahl aufgepreßt, der einzelne umgebogene Zungen 8 aufweist, mit denen die Manschette 3 in der Hülse 2 axial fixiert ist. Die axiale Fixierung der Manschette 3 in der Hülse 2 wird weiterhin durch einen in der Manschette 3 ausgebildeten Rücksprung 9 und einen komplementär in diesen Rücksprung eingreifenden Vorsprung 10 bewirkt, der in der Hülse 2 ausgebildet ist. Die Manschette 3 und die Hülse 2 können selbstverständlich aber auch mit einer streng zylindrischen Außenwand bzw. Innenwand ausgebildet und in anderer Weise, beispielsweise durch Verkleben, Fixieren am Hülsenrand oder Verkleben gegen Relativverschiebungen gegeneinander gesichert sein.

Der Federzungenring 7 weist nach radial schräg einwärts stehende Federzungen 11 auf, die der zusätzlichen federelastischen Abstützung des eingesteckten Spitzendes dienen. Ein solcherart in die Steckmuffe 1 der Fig. 1 eingestecktes Spitzende ist also auf zwei Radialflächenbereichen gegen Querkräfte abgestützt, nämlich einmal durch die gummielastisch verformbaren Rippen 5 und zum anderen durch die federelastisch verformbaren Zungen 11 des federelastischen Federzungenstützringes 7. Dies führt zu einer hohen Scherlastfestigkeit und Quersteifigkeit der Steckverbindung gegenüber Scherlasten und Knickkräften, ohne daß diese einwirkenden Querkräfte von den Dichtungselementen 4 aufgefangen zu werden brauchen. Außerdem wird durch die axialen gummielastisch verpreßten und verformten Rippen 5 bereits allein, verstärkt aber durch die Wirkung des federelastischen Stützringes 7 und dessen Federzungen 11 eine gegen axialen Zug weitgehend gesicherte Rohrsteckverbindung erhalten. Das in die Steckmuffe der Fig. 1 eingesteckte Spitzende ist dadurch gerade so gehalten, daß es nicht unbeabsichtigt, auch bei senkrechter Aushängung, aus der Steckverbindung herausfallen kann, daß es aber andererseits, beispielsweise zu Reparaturzwecken, durchaus auch wieder aus der Steckverbindung herausgezogen werden kann, die dann weiterverwendbar bleibt.

Bei dem in der Fig. 1 gezeigten Ausführungsbeispiel ist der Federzungenring 7 als separater Ring ausgebildet, der teleskopartig den Kragen der Hülse 2 übergreifend auf diesem aufgesteckt ist. Alternativ können die Haltezungen 8 und die federelastisch stützenden Federzungen 11 selbstverständlich auch einstückig mit der Hülse 2 ausgebildet sein.

**Patentansprüche**

1. Steckmuffe (1), insbesondere hülsenförmige beidseitig offene Steckmuffe, zur Herstellung einer Rohrsteckverbindung, wobei die Steckmuffe in ihrem Kragenbereich innen mindestens ein ringförmiges gummielastisches Dichtungselement (4) zur dichten Anlage an den Außenumfang eines in die Steckmuffe (1) eingeschobenen Spitzendes eines Rohres aufweist und im Bereich des Muffenspiegels bzw. axial innen hinter dem Dichtungselement (4) radial vorspringende, axial verlaufende und elastisch verformbare Rippen (5) als Scherlaststütze für das Spitzende trägt, dadurch gekennzeichnet, daß die Muffe (1) aus einer formsteifen oder formstabilelastischen Hülse (2) und einer in dieser sich über die gesamte axiale Länge der Hülse erstreckenden gummielastischen Manschette (3) besteht, an der die Dichtungselemente (4) einstückig angeformt sind, daß die axial verlaufenden Rippen (5) ebenfalls einstückig mit der Manschette (3) ausgebildet sind, und daß der durch die Innenkanten (6) der Rippen (5) bestimmte lichte Innendurchmesser wesentlich kleiner ist, als der innerhalb eines Fertigungstoleranzbereiches kleinste Außendurchmesser des in die Steckmuffe (1) einzusteckenden Spitzendes.

2. Steckmuffe nach Anspruch 1, dadurch gekennzeichnet, daß der durch die Innenkanten (6) der Rippen (5) bestimmte lichte Innendurchmesser um mindestens 15 % kleiner ist, als der innerhalb eines Fertigungstoleranzbereiches kleinste Außendurchmesser des in die Steckmuffe (1) einzusteckenden Spitzendes.

3. Steckmuffe nach einem der Ansprüche 1 oder 2, dadurch gekennzeichnet, daß die Rippen (5) im wesentlichen ein dreieckiges, vorzugsweise gleichseitig dreieckiges, Profil aufweisen und die radial inneliegenden Kanten (6) der Rippen (5) im wesentlichen axial verlaufen.

4. Steckmuffe nach einem der Ansprüche 1 bis 3, dadurch gekennzeichnet, daß am Muffenkragen außen und axial vor dem Dichtungselement (4) ein federelastischer Stützring (7) für das Spitzende angeordnet ist, der die Manschette (3) axial fixiert.

5. Steckmuffe nach Anspruch 4, dadurch gekennzeichnet, daß der Stützring (7) außen an der Hülse (2) befestigt ist und radial schräg nach einwärts stehende Federzungen (11) zur Abstützung des Spitzendes aufweist.

6. Steckmuffe nach einem der Ansprüche 1 bis 5, dadurch gekennzeichnet, daß auf der Außenseite der Manschette (3) vorspringende oder rückspringende Konturen oder Elemente (9) ausgebildet sind, die in komplementäre Elemente (10) oder Konturen eingreifen, die in der Innenwand der Hülse (2) ausgebildet sind.

**Claims**

1. An insert sleeve (1), particularly of casing-type socket open at both sides for a pipe insert joint, said insert sleeve having within its collar section at least one annular rubber-elastic seal element (4) to fit tightly the outer circumference of a spigot of a tube, said spigot being introduced into the insert sleeve (1), said sleeve bearing radially projecting, axially extending and elastically deformable ribs (5) in the region of the sleeve ground, respectively, axial inside behind the seal element (4), said ribs serving as shear load support for the spigot, characterized in that the sleeve (1) consists of a form-stiff or form-stable elastic casing (2) and a rubber-elastic sleeve member (3) extending inside and along the complete axial length of said casing, the seal elements (4) being integrally formed onto said sleeve member, in that the axially extending ribs (5) are also integrally formed with the sleeve member (3) and in the the inside circumference determined by the inner edges (6) of the ribs (5) is substantially smaller than that outside circumference of the spigot to be inserted into the insert sleeve (1) which is the smallest one within a region of the manufacturing tolerance.

2. An insert sleeve according to claim 1, characterized in that the inside diameter determined by the inner edges (6) of the ribs (5) is at least 15 % smaller than that outside circumference of the spigot to be inserted into the insert sleeve (1) which is the smallest one within a region of the manufacturing tolerance.

3. An insert sleeve according to one of claims 1 or 2, characterized in that the ribs (5) substantially have a triangular, preferably an equilateral triangular profile and in that the edges (6) of the ribs (5) located radially inside extend substantially in axial direction.

4. An insert sleeve according to one of claims 1 to 3, characterized in that a spring-elastic support ring (7) for the spigot is positioned at the sleeve collar outside and axially in front of the seal element (4), said support ring axially fixing the sleeve member (3).

5. An insert sleeve according to claim 4, characterized in that the support ring (7) is outsidely fixed to the casing (2) and has spring tongues (11) radially extending and being inclined inwards to support the spigot.

6. An insert sleeve according to one of claims 1 to 5, characterized in that contours or elements (9) sticking out or in are formed at the outside of the sleeve member (3) meshing with elements (1) or contours formed complementary within the inner wall of the casing (2).

## Revendications

1. Manchon à garniture (1), en particulier manchon à garniture en forme de douille ouverte des deux côtés, pour la réalisation d'une jonction de tubes par insertion, ce manchon à garniture comportant, dans la zone de ses colliers, à l'intérieur, au moins un élément d'étanchéité (4) annulaire élastique assurant un contact hermétique avec la surface extérieure de l'extrémité en pointe d'un tube inséré dans le manchon à garniture (1) et comportant des nervures (5) orientées dans le sens axial qui font saillie dans le sens radial dans la zone de la partie lisse du manchon ou, dans le sens axial, à l'intérieur, derrière l'élément d'étanchéité (4), sont déformables élastiquement et soutiennent l'extrémité en pointe dans sa résistance aux efforts de cisaillement, caractérisé en ce qe le manchon (1) est constitué par une douille (2) de forme rigide ou de forme stable tout en étant élastique et par un embouti (3) élastique qui s'étend sur toute la longueur, dans le sens axial, de la douille et dans lequel les éléments d'étanchéité (4) sont formés d'une seule pièce, en ce que les nervures (5) orientées dans le sens axial sont également d'une seule pièce avec l'embouti (3) et que le diamètre intérieur libre déterminé par les bords intérieurs (6) des nervures (5) est nettement plus petit que le diamètre extérieur le plus petit, dans un domaine de tolérances de fabrication, de l'extrémité en pointe qui doit être insérée dans le manchon à garniture (1).

2. Manchon à garniture selon la revendication 1, caractérisé en ce que le diamètre intérieur libre déterminé par les bords intérieurs (6) des nervures (5) est inférieur de 15 % au moins au plus petit diamètre extérieur, dans un domaine de tolérances de fabrication, de l'extrémité en pointe qui doit être insérée dans le manchon à garniture (1).

3. Manchon à garniture selon l'une des revendications 1 ou 2, caractérisé en ce que les nervures (5) ont un profil essentiellement triangulaire, de préférence en forme de triangle isocèle, et que les bords (6) des nervures (5) qui sont situés à l'intérieur dans le sens radial sont orientés essentiellement dans le sens axial.

4. Manchon à garniture selon l'une des revendications 1 à 3, caractérisé en ce qu'il comporte, au niveau du collier de manchon, à l'extérieur et dans le sens axial en avant de l'élément d'étanchéité (4), une bague élastique de support (7) de l'extrémité en pointe, qui fixe l'embouti (3) dans le sens axial.

5. Manchon à garniture selon la revendication 4, caractérisé en ce que la bague de support (7) est fixée extérieurement à la douille (2) et comporte, pour le support de l'extrémité en pointe, des languettes élastiques (11) orientées dans le sens radial obliquement vers l'intérieur.

6. Manchon à garniture selon l'une des revendications 1 à 5, caractérisé en ce que la surface extérieure de l'embouti (3) comporte des inégalités de surface ou des éléments (9) en saillie ou en retrait qui sont en prise avec des éléments (10) ou des inégalités de surface supplémentaires qui sont réalisés sur ou dans la paroi intérieure de la douille (2).

# FIG.1